# EUROPEAN PATENT APPLICATION

(11) **EP 0 560 626 A1**
(43) Date of publication of application: **15.09.1993**
(21) Application number: 93301894.7
(22) Date of filing: 12.03.1993
(51) Int. Cl.: C05F 1/00, C05F 3/00, C05F 11/00, C05F 7/00

(54) **Non-destructive recovery of natural nitrogen products**

(30) Priority: 13.03.1992 US 851063
(71) Applicant: HARMONY PRODUCTS, INC, Chesapeake, Virginia 23320 (US)
(72) Inventor: Moore, William Percy, Hopewell, Virginia 23860 (US)
(74) Representative: Gallafent, Richard John

(57) **Abstract**

A continuous process for the non-destructive recovery of natural nitrogenous materials as highly available particulate agricultural nutrients is described. The process employs natural materials such as poultry waste, waste water treatment sludge, alfalfa meal, hatchery waste, fea-thermeal, corn gluten meal, and bloodmeal in a fluid bed reactor-granulator. The natural materials, which are basic in nature or have been made basic, are acidified to pHs of about 3.0 to 6.5 in the reactor-granulator and formed into hardened particulates during a retention time of between about 4 to 20 minutes at a temperature between about 70-120°C. The particulates are discharged free of caramelization and before nitrogen loss from decomposition amounts to 0.5 percent of the natural nitrogenous materials. The continuous process provides a new natural nitrogenous particulate agricultural nutrient composition free of caramelization.

## Description

### FIELD OF INVENTION

The invention is directed to the recovery of nitrogen from natural materials to provide improved agricultural nutrient substances. More particularly, the invention is directed to a continuous process whereby these improved substances can be recovered without nitrogen loss or degradation of the natural materials.

### BACKGROUND OF INVENTION

The art has recently shown a strong interest in the use of natural nitrogenous materials as agricultural nutrient substances. Some of these substances are now being commercially produced as fertilizers and animal feed supplements with varying degrees of effectiveness.

United States Patent Nos. 4,997,469; 5,021,077, and 5,021,247, each naming the same inventor as the present application, disclose methods of preparing high integrity natural nitrogenous granules for agricultural use involving the heating of natural nitrogenous materials under alkaline conditions until the materials develop adhesive properties, and thereafter forming the materials into granules by mechanical means and heating the granules until they harden.

Although the foregoing disclosures represent economical steps forward in the utilization of natural nitrogen products, they employ time-consuming batch processes and do not address the need to quickly treat and recover the natural nitrogenous materials before degradation of these materials occurs. Degradation results in undesirable nitrogen loss by ammonia vaporization and caramelization of the natural nitrogenous materials together with an accompanying loss in nitrogen quality and availability.

The known priorart does not provide a continuous process for the recovery of natural nitrogenous materials suitable for use as improved agricultural nutrient substances without caramelization of the natural materials or the loss of ammonia nitrogen from the material.

Terms used in the description of the invention are defined as follows:
1. "Natural nitrogenous materials" - Any substance occurring in nature formed by living organisms and containing nitrogen, including food processing by-products and wastes. Such materials are usually in the form of protein or complex organic nitrogen compounds, for example uric acid.
2. "High integrity" - High degree of physical soundness, strength, and resistance to attrition.
3. "Adhesive property" - The capability of bonding surfaces together by surface attachment.
4. "Water-soluble nitrogen" - Soluble in water as defined by the Association of American Plant Food Control Officials (AAPFCO).
5. "Harden" - To make not soft but solid, firm to the touch, and resistant to attrition.
6. "Chopper" - A device for cutting material into small pieces by hitting with one or more sharp knives or bars.
7. "Percent" - Refers to weight percent.
8. "Base" - Class of compounds producing pHs between 7 and 14, and having the ability to neutralize acids.
9. "Agricultural Nutrient Substances" - Synthetic or natural materials normally used in the field of agriculture, such as plant nutrients or animal feeds and feed supplements.
10. "Caramelization" - Refers to a browning reaction. This reaction is a complex, non-enzymatic sequence of chemical changes which occur during the exposure to heat of foods containing carbohydrates and proteins. It begins with an aldol condensation of these compounds and ends with the formation of furfural. These changes undesirably affect nutritive value, texture, palatability and color of food.
11. "Non-destructive" - The basic-chemical structure of treated proteins and carbohydrates remains unchanged. Caramelization has not occurred.

### OBJECTS OF THE INVENTION

A primary object of the present invention is to provide a continuous process for non-destructively recovering agricultural nutrient substances from natural nitrogenous materials under conditions which eliminate caramelization of the natural materials and reduce loss to inconsequential levels.

Another primary object of the invention is to provide a continuous process for producing controlled release nitrogen fertilizers from natural nitrogen materials.

Another primary object of the present invention is to provide new agricultural nutrient substance compositions which exhibit an improved availability of the contained nitrogen.

Another primary object of the present invention is to provide new granular nitrogen fertilizer compositions which release nitrogen with improved control and safety.

### SUMMARY OF THE INVENTION

The present invention is directed to a continuous process for the non-destructive recovery of natural nitrogenous materials as particulate agricultural nutrients free of caramelization. It has been discovered that these valuable nitrogenous materials can be recovered free of caramelization through the use of a continuous process which maintains the nitrogen loss from the decomposition of the natural nitrogenous materials to an amount less than 0.5 percent of the nitrogenous materials.

For a process to achieve less than 0.5 percent nitrogen decomposition, and thereby preclude caramelization, it is necessary to continuously charge basic natural nitrogenous materials having pHs between about 7.5 and 14, and containing between about 15-60 percent moisture and between 1-14 percent nitrogen, to a continuous fluid bed reactor-granulator operating at a temperature between about 70-120°C and a pressure of about 1 atmosphere. Additionally, an acid is continuously charged to the fluid bed reactor-granulator to acidify the natural materials to a pH between about 3.0 and 6.5.

Although the natural nitrogenous material is acidified, it is necessary to regulate carefully the total material retention time in the continuous fluid bed reactor-granulator, generally for a time between about 4 and 20 minutes, to allow evaporation of any contained water and to provide a moisture level of between about 2 and 25 percent. This action provides time for the heat to harden the natural materials to particulate agricultural nutrients.

The regulation of the acidity, retention time, and temperature is necessary so that the particulate nutrients can be continuously discharged before nitrogen losses from decomposition of the natural nitrogenous materials amount to 0.5 percent of these materials. The continuously discharged particulate agricultural nutrients are then free of the caramelization which decreases the availability of the natural nitrogenous materials as agricultural nutrients.

Surprisingly, it has been found that the continuous process of the invention produces from natural nitrogenous materials a new agricultural nutrient which is free of caramelization and provides safe and controlled release of contained nitrogen as a plant food or a ruminant feed.

### DESCRIPTION OF PRESENTLY PREFERRED EMBODIMENTS

The process of the present invention produces particulate agricultural nutrients which are particularly effective in their release of nitrogen because the natural nitrogenous materials are recovered in dry particulate form before caramelization of the natural material occurs. The degradation of natural nitrogenous materials to ammoniacal nitrogen is indicative of caramelization. It has been found that this degradation and caramelization can be prevented when the natural nitrogenous materials are recovered as highly available agricultural nutrients from a continuous process wherein the natural nitrogenous starting materials are basic, or made basic, i.e., have pHs between 7.5 and 14. If the pH of the natural material is not basic, formation of hardened particulates is not possible within the time and temperature constraints required to prevent caramelization.

Further, the natural materials charged to the process of the invention should contain moisture levels of between about 15 and 60 percent to allow formation of hardened particulates. Higher moisture levels cause the reaction mass to stick to the interior surface of the continuous reactor-granulator and not form satisfactory particulates. To achieve the desired partial hydrolysis of the natural nitrogenous materials to more available forms without nitrogen loss and product caramelization, it has been found to be critical that the temperature of the materials in the continuous reactor-granulator should be maintained at between about 70-120°C. Temperatures outside this range cause reduced nutrient availability because of little hydrolysis at the lower temperatures and excessive ammonia loss and product caramelization at the higher temperatures.

Additionally, to make the continuous process effective, the fluid bed reactor-granulator should be operated at about atmospheric pressure.

It is also critical in the instant process that the natural materials are acidified to a pH between about 3.0 and 6.5 before the materials leave the fluid bed reactor-granulator. Acidification can be performed by continuously charging aqueous acid to the fluid bed reactor-granulator. Lower pHs increase caramelization and higher pHs produce softer than desirable particulates.

Satisfactory non-destructive recovery of the natural nitrogenous materials as highly available particulate agricultural nutrients is provided when retention time in the continuous fluid bed rector-granulator is controlled to be between about 4 and 20 minutes. This provides for reduction of moisture to between about 2 and 25 percent and the formation of hardened particulate agricultural nutrients.

By treating the natural nitrogenous materials under conditions as described above, it is possible to continuously discharge particulate nutrients free of caramelization and before nitrogen loss caused by the decomposition amounts to 0.5 percent of the natural nitrogenous materials. If the parameters of the process of the invention are not adhered to, either the ammoniacal nitrogen loss from decomposition will be higher than 0.5 percent and caramelization will occur, or the mixture will remain sticky and will not form particulate agricultural nutrients.

Many of the natural nitrogenous materials available as natural products or by-products can be non-destructively recovered by the process of the invention, including poultry waste, waste water treatment sludge, alfalfa meal, hatchery waste, feathermeal, corn gluten meal, and bloodmeal.

Some of the natural nitrogenous materials, such as poultry waste, already have sufficient basicity so that its pH is in the required pH range of about 7.5 to 14.0. Other materials, however, are not basic, such as feathermeal. These non-basic materials can be made sufficiently basic by admixing an aqueous strong base with the nitrogenous material before it is acidified in the process. The aqueous bases found to be most suitable are sodium hydroxide, potassium hydroxide, calcium hydroxide, magnesium hydroxide, ammonium hydroxide, and sodium carbonate. Weak bases, such as calcium carbonate, are not generally suitable.

Weak acids, such as boric acid, are not as effective for acidifying the mixture in the reactor-granulator as are strong aqueous acids. Suitable strong aqueous acids include sulfuric acid, nitric acid, phosphoric acid, formic acid, acetic acid, propionic acid, and polyphosphoric acid.

A variety of natural nitrogenous materials can be used in the instant invention as long as they fall within the parameters described above. The uniformity and hardness of the particulates produced by the continuous process of the invention are particularly improved when the nitrogenous materials are fine and include more than 90 percent of particles which are finer than 0.5 centimeter in diameter and contain between about 10-20 percent moisture.

Particulate nutrients are producible in economical and useful forms, according to the invention, when the natural nitrogenous materials used in the process contain between about 2-13 percent nitrogen, i.e., the concentrations typically found naturally in poultry broiler litter and poultry feathermeal.

When the natural materials used are not naturally basic in character, excellent non-destructive recovery of these materials can be obtained by admixing a strong base with the natural materials to provide a pH between about 9 and 12. It has been found that the base addition can be made before the natural material is charged to the continuous reactor-granulator, or can be performed in the reactor-granulator itself before acidification of the mixture in the reactor-granulator.

The process of the invention can be carried out in a fluid bed reactor-granulator which provides the necessary mixing, fluidization and reaction conditions, while minimizing any back mixing of the materials passing through the reactor-generator.

A practical and preferred reactor-granulator useful in carrying out the process of the invention is a fluid bed reactor-granulator which includes a horizontal mixing cylinder having one or more mixing elements mounted on a central rotating shaft. Such mixing elements serve to throw the natural nitrogenous materials toward the center of the cylinder and thereby create a mechanically fluidized bed which homogeneously blends the base mixture with the acid when charged. The cylinder is preferably also equipped with a dam at the discharge port of the cylinder to control the level of materials retained in the cylinder. One or more chopper blades are preferably mounted on the interior side wall of the cylinder and operate in conjunction with, preferably perpendicularly to, the mixing elements to break any lumps which may be present in the mixture.

It has been found that the best recoveries of evenly sized, hardened particulates free of caramelization are obtained when the reactor-granulator is operated at temperatures between about 70°C and 95°C. The temperature can be achieved by using a steam or oil jacketed reactor-granulator, by direct steam injection, or by preheating the natural nitrogenous materials to temperatures lower than required to cause caramelization.

To obtain the most economical use of the reactor-granulator, the level of materials therein should be controlled to be between about 10-50 percent of the total volume of the reactor-granulator. Levels lower than 10 percent provide poor heat transfer and uneconomical use of the equipment, while levels appreciably higher than 50 percent preclude good fluidization and particulate formation.

The most preferred retention time of the materials in the continuous reactor-granulator is between about 6 and 12 minutes to produce optimum nutrient particulates without nitrogen loss and product caramelization.

Optimum operation conditions provide product particles discharged from the fluid bed reactor-granulator before 0.1 percent ammonia nitrogen has been lost from the natural nitrogenous starting materials and the product is free of caramelization.

It has also found to be possible to combine synthetic materials, which are useful in agriculture and do not adversely affect operation of the process, with natural materials and recover products useful as agricultural nutrients by the continuous process of the invention. Synthetic materials effectively used in the process, which do not adversely affect the operation of the continuous process, include urea, urea-formaldehyde concentrate, saltpeter, ammonium sulfate, ammonium nitrate, ammonium polyphosphate, potassium phosphate, and potassium sulfate. It has also been found possible to include non-nitrogenous natural materials with the natural nitrogenous materials in the continuous process of the invention and recover agricultural nutrients free of caramelization. Non-nitrogenous natural materials effectively used in the process include phosphate rock, potassium magnesium sulfate, sunflower seed ash, sylvite, clay, and silica.

Bases and acids can be mixed with the natural nitrogenous materials in amounts suitable to generate exothermic heat of reaction sufficient to heat the materials from ambient temperature to the required reactor-granulator temperature of between about 70-95°C.

The agricultural nutrient composition generated by the process as described herein is new. For the first time, a dry, particulate, natural nitrogenous agricultural nutrient product free of caramelization is available to provide safe and controlled release of contained nitrogen as a plant food and a ruminant feed. It can be produced only upon close adherence to the process and operating conditions as described herein.

A particularly effective and practical aspect of the present invention is the provision of a process for the non-destructive recovery of natural nitrogenous materials as granularfertilizers which have the desirable properties of controlled release of nitrogen in soils and high physical integrity of the granules.

In a particular exemplary process, alkali metal hydroxide is admixed with natural nitrogenous materials, 90 percent of which are smaller in size than 4 U.S. Mesh, contain between 12 and 18 percent moisture, and between 2.5 and 13 percent nitrogen, so that the mixture reaches a pH between 9 and 11. The nitrogenous materials used to produce the granular fertilizer can be poultry waste, waste water treatment sludge, hatchery waste, abattoir waste, feathermeal, bloodmeal, corn gluten meal, or mixtures of these materials.

The base-mixed nitrogenous materials and a stream of strong aqueous mineral acid are continuously fed to one end of a horizontal stationary reactor-granulator cylinder containing one or more mixing plows mounted on a central rotating shaft which throw the nitrogenous material toward the center of the cylinder creating a mechanically fluidized bed and forcing axial and radial flows simultaneously on the materials therein. This action serves to form and harden granules. The reactor-granulator cylinder is also equipped with one or more chopper blades mounted on the interior side wall of the cylinder. These blades operate perpendicularly to the mixing plows to break any lumps present in the mixture and to control granule particle size so that a minimum of 50 percent of the particles are in the size range of between 4 and 30 U.S. Mesh. The reactor-granulator cylinder is also equipped with a dam at the discharge port located at the end of the cylinder most distant from the charging end to control the level of material retained in the cylinder to between 10 and 35 percent of the total cylinder volume.

For best preparation of the granular fertilizer, the horizontal reactor-granulator is continuously operated at a temperature between 75°C and 85°C so that the nitrogenous materials react with the alkali metal hydroxide base to develop adhesive properties and is then acidified by the aforementioned aqueous mineral acid in the fluid bed. This reaction generates the heat necessary to evaporate moisture and to harden the natural nitrogenous materials into granules which are continuously discharged free of caramelization after a retention time between 6 and 12 minutes in the reactor-granulator and before 0.1 percent ammonia nitrogen has been lost by degradation from the granules.

The hardened granules continuously discharged from the reactor-granulator contain between 1 and 10 percent moisture and are slightly acid. A 10 percent aqueous mixture of the granules has a pH between about 4 and 6.5.

The controlled release granular nitrogen fertilizer produced by the above specifically described process is new. For the first time, such a fertilizer composition free of caramelization is available for the safe,and controlled nitrogen fertilization of nitrogen sensitive plants, where all of the nitrogen is readily available and its release is not impeded by caramelization.

The following examples further illustrate the process of the present invention of non-destructive recovery of natural nitrogen for agriculture, and the efficacy of the compositions prepared thereby.

### EXAMPLE 1

Example 1 illustrates the continuous process for the non-destructive recovery of the natural nitrogenous material of poultry broiler litter as highly available particulate agricultural nutrient.

A dry fertilizer premix was prepared from the natural nitrogenous materials of chicken broiler litter and alfalfa meal. The premix was then admixed with the synthetic nitrogen compound urea and the natural non-nitrogenous material, sylvite. The mixture was stored in a feed hopper and had a composition as follows:

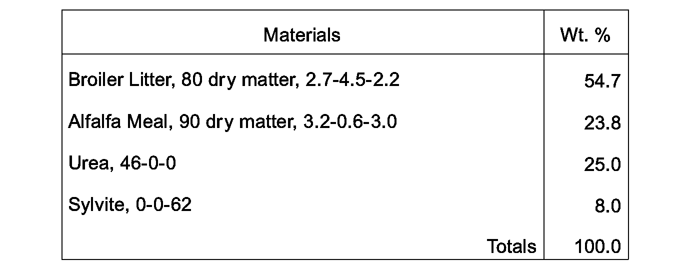

Also premixed and stored in a feed tank was the liquid fertilizer ingredient composition as follows:

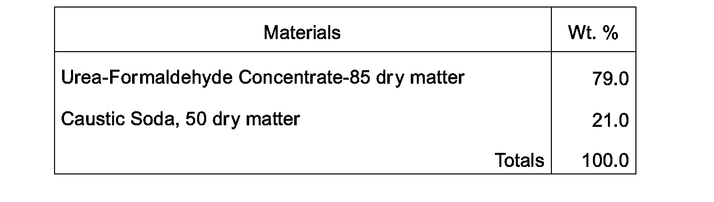

A mineral acid, i.e., sulfuric acid, was stored in another separate liquid storage tank.

A Littleford KM-300D continuous mixer having a total volume of 300 liters was used as a horizontal mechanically fluidized reactor-granulator containing the requisite mixing elements, chopper blades, and level controlling dam at the product discharge port. The horizontal mixing cylinder was jacketed for high pressure steam heating.

Operations were initiated by screw feeding the dry fertilizer mixture from the feed hopper to fill the Littleford KM-300D about 30 percent, and high pressure steam was applied to the jacket to bring the temperature of the mixture in the KM-300D to 80°C. The dry mixture feed rate was set to 7.2 Kg per minute. The liquid premix addition into the feed end of the KM-300D was commenced using a metering pump at a rate of 2,3 Kg per minute. Then continuous addition of 93 percent aqueous sulfuric acid was started using a metering pump to inject the mineral acid into the mixture halfway between the feed and discharge ends of the horizontal reactor-granulator cylinder at a rate of 0.37 Kg per minute.

The dam at the discharge end of the KM-300D was set to maintain about 100 liters of materials in the cylinder as the materials continuously passed through. The reaction mixture had roughly the density of water so that the retention time of the materials passing through the reactor-granulator was 10 minutes. As the liquid acid and dry materials met, were heated and fluidized mechanically, granules were formed and hardened, the temperature increased to 85°C, and the pH of the mixture decreased from 10.1 to 3.5 after the sulfuric acid was added. The pH remained at that level in the product discharged.

Moisture was removed during the reaction granulation so that the granules discharged contained 9 percent moisture and were free of caramelization. A small airflow through the fluid bed was used during the operation to remove any water vapor and ammonia generated during the operation. An ice-cooled condenser was used to recover the water and ammonia from the air effluent which was analyzed for ammonia content. Ammonia nitrogen in the effluent was less than 0.1 percent of the natural nitrogenous material fed to the reactor.

The fertilizer granules recovered were dried to a 2.5 percent moisture content in a fluid bed dryer, analyzed, and found to have the following composition:

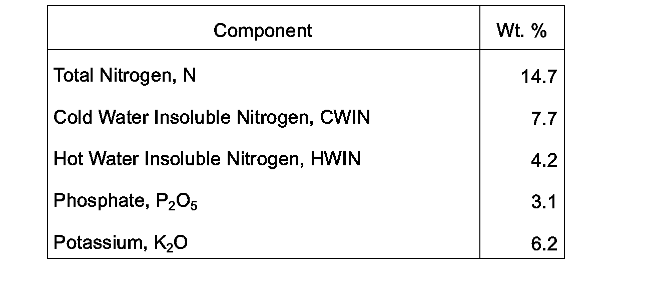

The dry granular fertilizer product was screened, and the following particle size distribution was found:

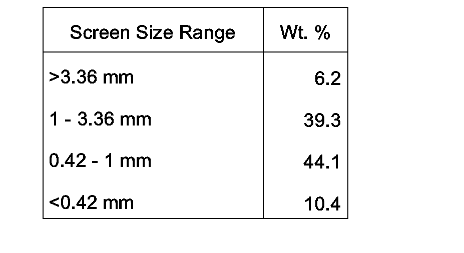

### EXAMPLE 2

Example 2 illustrates the effectiveness of the non-destructively recovered agricultural nutrients of the continuous process of the present invention as compared to a product prepared by a similar conventional means.

All of the ingredients of Example 1 were mixed in a Pugmill at ambient temperature in the weight ratios employed in Example 1 to form a mud-like mixture. The mixture was dried in a conventional atmospheric pressure drying oven at a temperature of 85°C until the moisture content was reduced to 9 percent. During the drying process, the mixture hardened into a solid block having several cracks which occurred because of shrinkage. Ammonia evolved from the mixture during drying amounted to 5 percent of the natural nitrogenous materials. The final pH of the mixture was 6.8 as compared to 3.5 with the product of Example 1.

Microscopic inspection of this product showed it to be a cemented, non-particulated, dark brown material which was caramelized and clearly degraded. The same inspection of the product of Example 1 showed that it was composed of individual particulates which were not stuck together in agglomerates, was light brown in color, and not caramelized.

The cemented Pugmill product was ground and screened so that sufficient 1.19-3.36mm material was obtained for analyses. The results obtained are as follows:

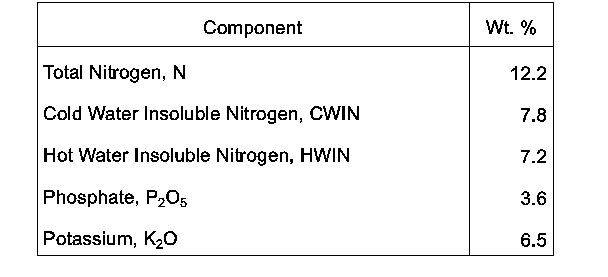

The Availability Index of the slow release nitrogen in Example 1 was 45.5 percent as compared to only 7.7 percent for the product made by oven drying the Pugmill mixed product of Example 2.

The effectiveness of the two products as agricultural nutrient fertilizers was compared in field plot tests involving growing, measuring, and evaluating tall fescue grass which had been treated initially with one application of 732 grams nitrogen per 100 square meters turf area with of 732 grams nitrogen per 100 square meters turf area with the two products. Comparisons obtained with the two products and urea after 30, 60, and 90 days are tabulated as follows:

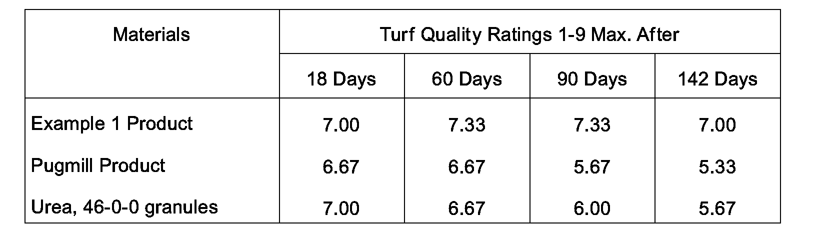

It can be seen that the product of Example 1 out performed the Pugmill product and urea, and that the differences became more apparent as the tests were continued. These results show that the nitrogen in the Example 1 product was non-destructively recovered and that the nitrogen in the product recovered was available as an especially effective agricultural nutrient.

As will be apparent to one skilled in the art, various modifications can be made within the scope of the aforesaid description. Such modifications being within the ability of one skilled in the art form a part of the present invention and are embraced by the appended claims.

## Claims

1. A continuous process for non-destructive recovery of natural nitrogenous materials as highly available particulate agricultural nutrients, comprising:
(a) continuously charging natural nitrogenous materials exhibiting pHs between 7.5 and 14 and having between about 15-60 percent moisture content and between about 1-14 percent nitrogen, to a continuous fluid bed reactor-granulator operating at a temperature between about 70-120°C and a pressure of about 1 atmosphere;
(b) acidifying the natural materials to a pH between about 3.0 and 6.5 by continuously charging acid to the fluid bed reactor-granulator;
(c) controlling retention time in the continuous fluid bed reactor-granulator to between about 4 and 20 minutes to reduce the moisture content to between about 2-25 percent and form hardened particulate agricultural nutrients; and
(d) continuously discharging the particulate nutrients free of caramelization before nitrogen loss from decomposition amounts to 0.5 percent of the natural nitrogenous materials.

2. A continuous process for converting a natural nitrogenous material into particulate agricultural nutrient substances in which a fluid bed reactor-granulator with an inlet and an outlet is charged at its inlet with the natural nitrogenous material, and particulate agricultural nutrient substances are discharged at the outlet, the process being characterised by
operating the reactor-granulator in a temperature range of 70°C to 120°C and at atmospheric pressure;
using as natural nitrogenous material one having an average pH in the range of 7.5 to 14, an average moisture content in the range of 15 to 60 percent by weight and an average nitrogen content in the range of 1 to 14 percent by weight;
continuously adding the natural nitrogenous material in the reactor-granulatoran acid to acidify the natural nitrogenous material to a pH in the range of 3.0 to 6.5;
operating the reactor-granulator to provide that the nitrogenous material/acid mix travels from the inlet to the outlet in a period of 4 to 20 minutes;
and discharging the natural nitrogenous material/acid mix at the outlet in particulate form with an average moisture content of 2 to 25 percent by weight, and before the material undergoes a loss of nitrogen by decomposition of 0.5 percent by weight.

3. A process according to claim 1 or claim 2 characterised in that the natural nitrogenous materials contain between about 2.0 and 13 percent by weight nitrogen.

4. A process according to any one of claims 1 to 3 characterised in that the natural nitrogenous materials comprise particles, of which particles at least 90 percent have a diameter less than 5 millimetres, and contain between 10 and 20 percent by weight moisture.

5. A process according to any one of claims 1 to 4 characterised in that the natural nitrogenous material is poultry waste, waste water treatment sludge, alfalfa meal, hatchery waste, feathermeal, corn gluten meal, or bloodmeal or a mixture of two or more of these.

6. A process according to any one of claims 1 to 5 characterised in that one or more of urea, urea-formaldehyde concentrate, saltpetre, ammonium sulfate, ammonium nitrate, ammonium polyphosphate, potassium phosphate, and potassium sulfate is admixed with the natural nitrogenous materials.

7. A process according to any one of claims 1 to 7 characterised in that one or more of phosphate rock, potassium magnesium sulfate, sunflower seed ash, sylvite, clay, and silica is affixed with the natural nitrogenous materials.

8. A process according to any one of claims 1 to 7 characterised in that one or more strong aqueous bases selected from a group consisting of sodium hydroxide, potassium hydroxide, calcium hydroxide, magnesium hydroxide, ammonium hydroxide and sodium carbonate, is admixed with the natural nitrogenous materials before acidifying.

9. A process according to any one of claims 1 to 8 characterised in that a strong base is admixed with the natural nitrogenous materials to adjust its pH to between 9 and 12 before acidifying.

10. A process according to any one of the preceding claims characterised in that the acid is sulphuric acid, nitric acid, phosphoric acid, formic acid, acetic acid, propionic acid, or polyphosphoric acid.

11. A process according to any one of the preceding claims characterised in that the fluid bed reactor-granulator is operated in a temperature range of 70°C - 95°C.

12. A process according to any one of the preceding claims characterised in that a base and the acid are admixed with the natural nitrogenous materials in amounts sufficient to generate an exothermic heat of reaction sufficient to heat the materials from ambient temperature to a temperature between 70°C and 95°C.

13. A process according to any one of the preceding claims characterised in that the level of material continuously maintained in the fluid bed reactor-granulator is controlled to be between about 10-50 percent of the total volume of the reactor-granulator.

14. A process according to any one of the preceding claims characterised in that the particulates are discharged from the fluid bed reactor-granulator after a retention time of between 6 and 12 minutes in the reactor-granulator.

15. A process according to any one of the preceding claims characterised in that the particulates are discharged from the fluid bed reactor-granulator before 0.1 percent by weight ammonia nitrogen has been lost from the natural nitrogenous materials.

16. A process according to any one of the preceding claims characterised in that the fluid bed reactor-granulator comprises a horizontal mixing cylinder with an inlet and a discharge port, the cylinder containing one or more mixing elements mounted on a central rotating shaft to throw the natural nitrogenous material toward the centre of the cylinder and thereby create a mechanically fluidised bed which homogeneously blends the basic natural nitrogenous material with the acid, the cylinder also being equipped with a dam at the discharge port to control the level of material retained in the cylinder, and one or more chopper blades mounted on the interior side wall of the cylinder, the chopper blades operating in conjunction with the mixing elements to break up any lumps of nitrogenous material present in the cylinder.

17. A continuous process for the non-destructive recovery of natural nitrogenous materials as granular fertilizers exhibiting improved controlled release of nitrogen and high physical integrity comprising:
(a) admixing sufficient alkali metal hydroxide with natural nitrogenous materials, about 90 percent of which are smaller in size that 4 U.S. Mesh, and contain between about 12 and 18 percent moisture and between about 2.5 and 13 percent nitrogen, so that the mixture exhibits a pH between about 9 and 11, the nitrogenous materials being selected from the group consisting of poultry waste, waste water treatment sludge, hatchery waste, abattoir waste, feathermeal, bloodmeal, and corn gluten meal;
(b) continuously charging the admixture of alkali metal hydroxide and nitrogenous materials and a stream of strong aqueous mineral acid to one end of a horizontal stationary reactor-granulator cylinder containing one or more mixing elements mounted on a central rotating shaft which throws the nitrogenous material toward the centre of the cylinder creating a mechanically fluidised bed and forcing axial and radial flows simultaneously on the materials therein forming and hardening granules, the reactor-granulator cylinder being equipped with one or more chopper blades mounted on the interior side wall of the cylinder and operating in conjunction with the mixing elements to break any lumps present and control granule particle size so that a minimum at about 50 percent of the particles are in the size range between about 0.6 and 4.75mm, and the cylinder also having a dam at the discharge port located at the end of the cylinder opposite the charging end to control the level of material retained in the cylinder to between about 10 and 35 percent of the total cylinder volume;
(c) continuously operating the horizontal reactor-granulator at a temperature between about 75-85°C so that the nitrogenous materials react with the alkali metal hydroxide base to develop adhesive properties and are then acidified by the mineral acid in the fluid bed to generate heat sufficient to evaporate moisture and harden the natural nitrogenous materials into granules, which are continuously discharged free of caramelization after a retention time in the reactor-granulator of between about 6 to 12 minutes, and before 0.1 percent ammonia nitrogen has been lost by degradation of the nitrogenous materials; and
(d) recovering the discharged hardened granules which contain between about 1-10 percent moisture and exhibit a pH of between about 4-6.5.
